Europäisches Patentamt

European Patent Office

Office européen des brevets

(11) Publication number: 0 270 251
A2

# EUROPEAN PATENT APPLICATION

(21) Application number: 87309759.6

(51) Int. Cl.4: G01T 1/29

(22) Date of filing: 04.11.87

(30) Priority: 06.11.86 GB 8626576

(43) Date of publication of application:
08.06.88 Bulletin 88/23

(84) Designated Contracting States:
AT BE CH DE ES FR GB IT LI LU NL SE

(71) Applicant: AMERSHAM INTERNATIONAL plc
Amersham Place
Little Chalfont Buckinghamshire HP7
9NA(GB)

(72) Inventor: Finlan, Martin Francis
7 Ballard Close
Aylesbury Bucks.(GB)
Inventor: Brady, Michael Anthony Warburton
Amersham Place
Little Chalfont Buckinghamshire HP7
9NA(GB)

(74) Representative: Boydell, John Christopher et
al
Stevens, Hewlett & Perkins 5 Quality Court
Chancery Lane
London, WC2A 1HZ(GB)

(54) Imaging method and apparatus.

(57) Apparatus and method utilising a silicon drift detector (1) in the mapping of the distribution of radioactive or fluorescent activity in a specimen (20). Means are provided for mounting the specimen adjacent one surface of the detector. Scanning means (29) are used to scan around the electrodes of the detector (1) to build up an image of the distribution of radioactive or fluorescent activity on a display (27). The apparatus may optionally be provided with an optical column (22) and/or a UV source (30) for simultaneous viewing of optical and/or fluorescent images.

FIG.3

## "IMAGING METHOD AND APPARATUS"

This invention relates to a method of imaging and to apparatus for carrying out such method.

Recent developments in solid state detectors enable the position of radioactive or similar events to be ascertained in two dimensions. One example of such a detector is the silicon drift detector, to be described in greater detail below, which briefly comprises a plate-like slab of high purity, high resistivity silicon on which are formed a plurality of parallel spaced strip electrodes and a plurality of anodes arranged along one side. Radioactive particles or photons which pass through the silicon result in the generation of hole-electron pairs which can be directed to adjacent electrodes and anodes to provide an X-Y indication of the position of the passage of the particle or photon.

According to the present invention there is provided a method of imaging utilising imaging apparatus including a semiconductor detector comprising a plate of semiconductor material having a plurality of electrodes on at least one face thereof, and electronic readout circuitry connected to said electrodes in such a way as to enable a signal to be generated upon the passage through the plate of a radioactive particle or photon, said signal being indicative of the spatial position on the plate at which the particle or photon passed through the plate, said method comprising applying to one surface of said plate a specimen in laminar form, whereby the distribution of any radioactive or fluorescent activity within the specimen may be ascertained by analysis of said signal.

Examples of suitable specimens would include thin slices of tissue or suspensions of cells, incorporating radioactive and/or fluorescent labelling.

However the method could be adapted to a much wider range of applications. For example, it is usual in molecular biology to separate nucleic acid fragments, or to separate proteins, by one dimensional, and occasionally two dimensional, electrophoresis on sheets of polyacrylamide gel. One needs to know the positions of the bands or spots in one or two dimension(s), as the position gives important information relating to the chemical identity of each band or spot. Additionally some, or all of the bands or spots may be labelled, and more than one type of label may be used in each experiment. Currently, the sheets of polyacrylamide used in such applications are large, and the use of a microscope is not necessary. However, in certain applications the size of the polyacrylamide gel could be cut down to such dimensions as to make it compatible with the present invention, with considerable advantages in speed and convenience, and in the acquisition, storage and processing of the positional information. It is possible also to remove the nucleic acids or proteins from the gel on to a support matrix such as a nitrocellulose sheet ("blotting") where they may be "probed" to establish identity -with "DNA probes" in the case of nucleic acids and with antibodies in the case of proteins, the DNA probe and the antibody being suitably labelled (these processes are known as Southern blotting and Western blotting respectively).

For the particular case of DNA sequencing, where one dimensional electrophoretograms are employed, using several "tracks" side by side, and with each track containing several hundred bands, it will be preferable to employ the solid state detector in equipment of different design, as disclosed in our co-pending application No. 8626575, "Apparatus for Biochemical Sequencing" dated 6th November 1986 and the subject matter of which is incorporated herein by reference.

In an exemplary apparatus according to the invention, the specimen support table of a microscope takes the form of a silicon drift detector. Means connected to the detector are provided for electronically scanning across the electrodes and anodes of the detector to build up a two-dimensional picture of any radioactive particles or photons issued by the specimen. Thus if the specimen is labelled with a radioactive label the distribution of radioactivity within the specimen can be displayed on a suitable screen. At the same time the optical image of the specimen is passed to the eyepiece as usual, but there may additionally be provided a semi-silvered mirror for directing part of the light from the specimen to a video camera, such as a CCD imaging camera, and the resultant image, which can be adjusted to provide the same field of view as that from the semiconductor detector, may be displayed on the aforsaid screen. Preferably means are provided for allowing "real time" superposition of the two images. Preferably also, image processing facilities are provided to enable addition or subtraction of the outputs from the video camera on the one hand and the semiconductor detector on the other. This enables manipulation of grey scales or a pseudo-colour display.

It is also possible to incorporate a UV source providing a UV beam incident on a fluorescent-labelled specimen, and to view the resultant fluorescent image via a video camera. The fluorescent image can likewise be superimposed, added or subtracted from the radioactive and light images.

It will thus be seen that it is possible to view the various images in real time and thus visualise processes as they occur, for example within cells, simultaneously via radioactive labels, fluorescent labels and the light image.

Although described in relation to a conventional optical microscope, there is no reason why the teaching of this invention should not be applied to an electron microscope or a scanning optical microscope.

In an embodiment of the invention, means are provided for discriminating between different energy levels in the particles passing through the detector. The different images so formed may be pseudo coloured on the screen to enable the viewer to differentiate between several energy levels displayed simultaneously. Thus any one specimen may be labelled with several different radioactive labels in order to enable simultaneous viewing of the reaction of the specimen to different chemicals.

In order that the invention may be better understood, an embodiment thereof will now be described by way of example only and with reference to the accompanying drawings in which:-

Figure 1 is a diagrammatic side section of a silicon drift detector for use in the method and apparatus of the present invention;

Figure 2 is a plan view of the detector of Figure 1; and

Figure 3 is a block diagram of an embodiment of a microscope apparatus according to the invention.

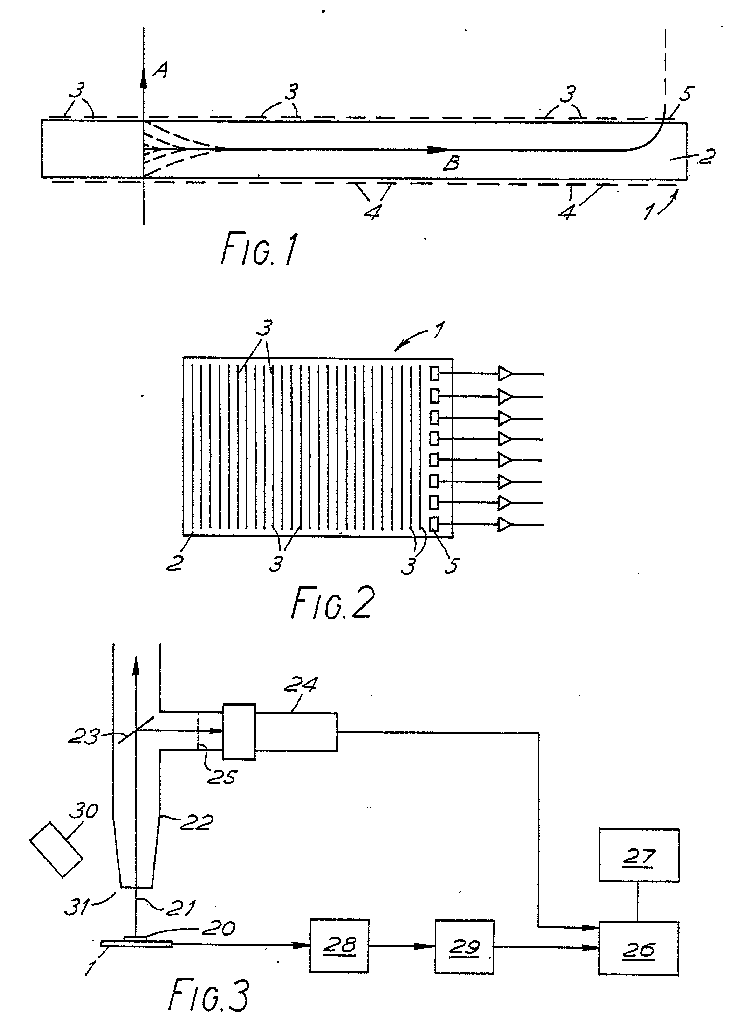

Referring first to Figures 1 and 2 there is shown an exemplary silicon drift detector 1. The detector comprises a plate 23 of high purity n-type silicon cut from a single crystal and typically of 280 $\mu$m thickness. Mounted onto the upper and lower surfaces of the plate 2 by way of rectifying junctions of p$^+$ material such as boron are a plurality of strip electrodes referenced 3 on the upper surface and 4 on the lower surface. The pitch of the electrodes 3 and 4 is typically 20 $\mu$m. Also on the upper surface are a plurality of anodes 5, typically of 40 $\mu$m pitch. The electrodes 3 and 4 and the anodes 5 are connected to associated electronics (not shown) which amplifies and processes signals from the electrodes, which signals are generated by the passage of a radioactive particle or photon through the plate 2, as will be explained later.

The operation of the drift detector relies on achieving an electric field distribution within the silicon plate 2 which causes the electrons, once liberated by passage of a particle or photon (see arrow A in Figure 1), to move or "drift" in a rightwards direction along the path indicated by arrow B, eventually to be collected by an anode 5. The holes meanwhile flow to the nearest strip electrode 3 and/or 4. Thus, in response to the passage of a particle or photon a current is set up between an anode 5 and one or more strip electrodes 3 or 4.

The desired electron drift is achieved by correct choice of the potentials on the strip electrodes 3 and 4. It will be noted that the electrodes on the top and bottom are in oppositely-disposed pairs; the potentials are arranged such that the electrodes 3 and 4 of each such pair have the same potential so that there is no component of electric field directly across the silicon plate 2. Each set of plates is, however, at a different potential to the next, providing a continuous rising or falling potential gradient as one moves along the plate 2. The anode 5, for example, might be at ground potential, with the next adjacent strip electrode 3 and its corresponding opposite electrode 4 at a negative potential of 100 volts. The next pair 3, 4 of strip electrodes will have a higher negative potential, say 110 volts, and so on to the left-hand end of the detector. The electric field distribution which results acts effectively as a sloping "gutter", positioned along the centre of the silicon plate, along which liberated electrons flow from left to right in Figure 1. At the right-hand end, the field distribution is distorted in such a way as to cause the electrons to flow into the anode, as mentioned above.

One of the advantages of the drift detector is that it can be configured as a multi-anode detector, enabling detection of events in two dimensions. This is illustrated diagrammatically in Figure 2 which is a view of the top surface showing only the strip electrodes 3 (the electrodes 4 being hidden), together with a plurality of anodes 5.

In such a detector, passage of a particle or photon will liberate holes, which will go to the adjacent strip electrode 3 and/or 4, as explained above and electrons which will drift in a rightwards direction along a path at right angles to the strip electrodes and will eventually enter one of the anodes 5, thus causing a pulse of current which can be amplified and processed by the readout electronics. Thus the X-Y co-ordinate position of the passage of the particle or photon can be assessed by knowledge of the particular strip electrode and anode concerned. In practice the strip electrodes and anodes can be continuously two-dimensionally scanned to obtain a picture of events occurring within the silicon plate 1.

The spatial resolution obtained from the detector is dependent upon the pitch of the electrodes and anodes and also upon the manner in which the electrodes are connected to the associated readout circuitry. However, a resolution of 3 $\mu$m is obtainable with an inter-electrode pitch of 20 $\mu$m along the axis at right angles to the electrodes 3 and 4; in the orthogonal axis, with an inter-anode pitch of 40 $\mu$m, a resolution of 6 $\mu$m is obtainable.

The present invention utilises a detector such as described above to obtain a two-dimensional map of the distribution of radioactivity or fluorescence in a specimen. This may be achieved simply by placing a suitably labelled specimen directly onto the top or bottom surface of the detector, possibly with a thin protective layer inbetween. The readout electronics will produce a signal which may for example be displayed on a computer screen which delineates the distribution of the radioactive or fluorescent label within the specimen. It is however more convenient to be able to simultaneously view a conventional optical image of the specimen at the same time as the distribution of the label. This enables the operator to assess the distribution of label by reference to the physical features of the specimen. This can be achieved by incorporating a detector 1 as the bed of a microscope.

referring to Figure 3, there is shown a microscope apparatus incorporating a detector 1 as a support for a specimen 20. Light 21 reflected from the specimen passes into the microscope optics (not shown) within the microscope column 22 and to the eyepiece. A semi-silvered mirror 23 intercepts some of the light and passes it to a video camera 24, optionally via a filter 25. The output from the video camera is passed, after appropriate signal processing, to a computer 26 having a screen display 27. The various outputs from the detector 1 are passed to detection electronics 28 which is operable to amplify the signals from the electrodes and anodes of the detector and pass them to respective sample and hold circuits within the detection electronics. Scanning means 29 are used to cycle round or scan the outputs to achieve a serial signal on a single line which is then passed, again after appropriate signal processing, to the computer 26. An optional UV source 30 generates a UV beam 31 which is incident on the specimen 20 and may likewise provide a picture in the camera 24 if the specimen is labelled with a fluorescent label.

The above described apparatus enables the simultaneous viewing of optical, radioactive and/or fluorescent images of a suitably labelled specimen such as a tissue section, a mini electrophoretogram or the "blot" prepared from it. In addition, if the detection electronics 28 is equipped with amplitude discrimination facilities, specimens labelled with different energy isotopes can be imaged simultaneously. For example, a specimen labelled both with sulphur-35 and phosphorous-32 can produce separate images which can be simultaneously displayed, together with the optical and possibly the fluorescent images as well. If a suitable imaging board is available for the computer, the images can alternatively be combined in various ways, for example by addition or subtraction, to give different effects necessary to visually analyse the specimen. Pseudo-colours can also be generated by manipulation of the grey scales.

The detector 1 effectively provides a map of the distribution of radioactivity within the specimen which can be compared with a corresponding optical and/or fluorescent image of the specimen. This enables the pattern of radioactivity within the specimen to be directly correlated with the physical features of the specimen.

## Claims

1. A method of imaging utilising imaging apparatus including a semiconductor detector comprising a plate of semiconductor material having a plurality of electrodes on at least one face thereof, and electronic readout circuitry connected to said electrodes in such a way as to enable a signal to be generated upon the passage through the plate of a radioactive particle or photon, said signal being indicative of the spatial position on the plate at which the particle or photon passed through the plate, said method comprising applying to one surface of said plate a specimen in laminar form, whereby the distribution of any radioactive or fluorescent activity within the specimen may be ascertained by analysis of said signal.

2. A method as claimed in claim 1 further comprising scanning across said electrodes to build up a representation of the distribution of particles or photons issued by the specimen.

3. A method as claimed in claim 2 wherein said electrodes comprise a first set of electrodes spaced apart in a first direction and a second set of electrodes spaced apart in a second direction orthogonal to the first, whereby said scanning acts to build up a two-dimensional representation of the distribution of particles or photons issued by the specimen.

4. A method as claimed in any one of the preceding claims including simultaneously generating an optical image of the specimen.

5. A method as claimed in any one of the preceding claims including simultaneously generating a fluorescent image of the specimen.

6. Apparatus for carrying out the method of any one of the preceding claims, said apparatus including a semiconductor detector comprising a plate of semiconductor material having a plurality of electrodes on at least one face thereof, electronic readout circuitry connected to said electrodes in such a way as to enable a signal to be generated upon the passage through the plate of a radioactive particle or photon, said signal being indicative of the spatial position on the plate at which the particle or photon passed through the plate, means for mounting a specimen in laminar form adjacent one surface of said plate, and means for analysing said signal so as to ascertain the distribution of radioactive or fluorescent activity within the specimen.

7. Apparatus as claimed in claim 6 further comprising scanning means for scanning across said electrodes in order to build up a representation of the distribution of particles or photons issued by the specimen.

8. Apparatus as claimed in claim 7 wherein said electrodes comprise a first set of electrodes spaced apart in a first direction and a second set of electrodes spaced apart in a second direction orthogonal to the first, whereby said scanning means acts to build up a two-dimensional representation of the distribution of particles or photons issued by the specimen.

9. Apparatus as claimed in claim 8 including means for applying d.c. potentials to said electrodes, the polarity and magnitude of said potentials, and the positioning of said first and second sets of electrodes being such that said first set of electrodes forms a gutter for free charge carriers within said plate of semiconductor material whereby such carriers flow towards the second set of electrodes to be collected thereby.

10. Apparatus as claimed in claim 9 wherein said first set of electrodes comprises a plurality of parallel strip electrodes spaced apart in a first direction and said second set of electrodes comprises a plurality of electrodes spaced apart in a second direction orthogonal to the first direction.

11. Apparatus as claimed in any one of claims 6 to 10, further comprising optical apparatus for generating a simultaneous optical image of the specimen.

12. Apparatus as claimed in any one of claims 6 to 11, further comprising means for generating a fluorescent image of the specimen.

13. Apparatus as claimed in any one of claims 6 to 12 further comprising means for discriminating between different energy levels in the particles passing through the detector.

FIG.1

FIG.2

FIG.3